# EUROPEAN PATENT APPLICATION

(11) **EP 4 793 693 A1**
(43) Date of publication of application: **19.08.2026**
(21) Application number: 25200398.3
(22) Date of filing: 05.09.2025
(51) Int. Cl.: G02F 1/03, G02F 1/035, G02F 1/29

(54) **SOLID STATE OPTICAL SWITCHING ENGINE**

(30) Priority: 18.02.2025 US 202519056510
(71) Applicant: II-VI Delaware, Inc., Wilmington, DE 19890 (US)
(72) Inventor: Xu, Yiwei, Wilmington, 19890 (US); Gulati, Nitesh, Wilmington, 19890 (US); Choo, Wei Chien, Wilmington, 19890 (US); Read, Andrew, Wilmington, 19890 (US); Bolger, Jeremy, Wilmington, 19890 (US); Baxter, Glenn Wayne, Wilmington, 19890 (US); Armstrong, Julian, Wilmington, 19890 (US)
(74) Representative: Tegethoff, Sebastian

(57) **Abstract**

Described herein is a pixelated optical device (100) comprising a substrate (102) and a pair of electrodes (104, 106) including a first (104) and a second (106) electrode. The second electrode (106) is mounted to the substrate (102) and includes a two-dimensional array of pixels (108) extending in both a first and second dimension. Device (100) also comprises a solid-state thin film electro-optic material (112) that is disposed between the first and second electrodes (104, 106) and configured to be drivable into a plurality of states in response to an electric field applied to pixels (108) between the first and second electrodes (104, 106). The electric field applied across each pixel (108) is provided by a drive signal provided to the pixel of the second electrode.

## Description

### Field of the Disclosure

The present application relates to optical devices and in particular to optical switching devices.

Embodiments of the present disclosure are particularly adapted for electro-optic wavelength selective switches and methods of fabricating thereof. However, it will be appreciated that the disclosure is applicable in broader contexts and other applications.

### Background

The exponential increase in data traffic due to video streaming, social networking and cloud computing has created the need for more powerful data centers. However, this enormous growth in bandwidth comes with a significant increase in power consumption.

As the speed of optical networks advances to 400Gb/s and beyond, electrical switches become cost and power inefficient. This inefficiency can be addressed by replacing electrical switches with all-optical switches. In data centers alone, it is estimated that an order of magnitude reduction in power consumption could be achieved with optical switches. Optical switches in telecommunication optical networks are enabled by Reconfigurable Optical Add/Drop Multiplexers (ROADM), the key component of which is a Wavelength Selective Switch (WSS).

The most dominant optical switch engine technology for WSS devices employs liquid crystal as the electro-optic material, integrated onto a silicon-based platform (LCoS).

Although LCoS devices have many advantages, the technology suffers from some limitations. First, LCoS devices often require manual assembly, which is inherently not conducive to streamlined mass production. In particular, the fabrication process of LCoS devices entails meticulous filling of the space between a backplane silicon and a glass with liquid crystals. Second, LCoS devices consume large amounts of power, mainly due to the use of active thermal control systems to maintain constant operating temperature as liquid crystals are highly temperature sensitive.

The inventors have identified that further improvements in optical switching devices can be made.

Any discussion of the background art throughout the specification should in no way be considered as an admission that such art is widely known or forms part of common general knowledge in the field.

### Summary of the Disclosure

In accordance with a first aspect of the present disclosure, there is provided a pixelated optical device comprising:
a substrate;
a pair of electrodes including a first and a second electrode, the second electrode mounted to the substrate and including a two dimensional array of pixels extending in both a first and second dimension; and
a solid-state thin film electro-optic material disposed between the first and second electrodes and configured to be drivable into a plurality of states in response to an electric field applied to pixels between the first and second electrodes, wherein the electric field applied across each pixel is provided by a drive signal provided to the pixel of the second electrode.

In some embodiments, the thin film electro-optic material comprises a lead titanate-based material. In other embodiments, the thin film electro-optic material comprises a lithium niobate-based material. In further embodiments, the thin film electro-optic material comprises a barium titanate-based material. In still further embodiments, the thin film electro-optic material comprises a potassium tantalate-based material.

Preferably the thin film electro-optic material is formed from a semiconductor compatible manufacturing process. The semiconductor compatible manufacturing process may comprise a physical vapor deposition (PVD) process. The PVD process may comprise a sputter deposition process. The semiconductor compatible manufacturing process may comprise bonding to a bulk electro-optic material followed by a thin down process.

In some embodiments, the first electrode comprises an indium tin oxide (ITO) material. In some embodiments, the second electrode comprises a platinum (Pt) material. In other embodiments, the second electrode comprises an aluminum (Al) material.

In some embodiments, the device comprises a buffer layer disposed between the second electrode and the thin film electro-optic material. In some embodiments, the buffer layer comprises lead titanate. In other embodiments, the buffer layer comprises a lead lanthanum titanate (PbLaTiO₃) material.

In some embodiments, the electro-optic material comprises a PMN-PT material. In some embodiments, the electro-optic material is a textured thin film.

In some embodiments, the substrate is a metallic substrate. In some embodiments, the substrate is a silicon substrate.

In some embodiments, the thin film comprises a two dimensional array of pixels corresponding to the second electrode.

In some embodiments, the device comprises a diffractive optical element disposed between the electrodes for at least partially reflecting an incident optical signal, wherein the diffractive optical element comprises an array of diffracting formations formed of a first material having a first refractive index, the diffracting formations extending in one or both of the first and second dimensions and being at least partially surrounded by a second material formed of a lower or higher refractive index than the first material. In some embodiments the second material is formed of a lower refractive index material than the first material.

In some embodiments, the diffractive optical element is disposed between the electro-optic material and the second electrode. In other embodiments, the diffractive optical element is disposed within the electro-optic material. In some embodiments, the first material is silicon. In some embodiments, the second material is silicon dioxide.

In some embodiments, the diffracting formations are spaced apart in the first dimension by a fixed periodicity. In other embodiments, the diffracting formations are spaced apart in the first dimension by a variable periodicity. In some embodiments, the diffracting formations are spaced apart in the first dimensions by a periodicity that is less than the wavelength of the incident optical signal.

In some embodiments, the diffracting formations form one or more layers of material having non-periodic refractive features and configured to manipulate properties of a wavefront of an incident optical signal. The one or more layers may form a metasurface. In some embodiments, the one or more layers form a dielectric mirror. In some embodiments, the one or more layers form a half-wave plate or quarter-wave plate.

In some embodiments, the drive signal is a DC electric signal. In other embodiments, the drive signal is a low frequency electric signal.

In some embodiments, the refractive index of the electro-optic material changes in proportion to the applied electric field.

In some embodiments, the electro-optic material is polarization independent.

In accordance with a second aspect of the present disclosure, there is provided a method of forming a pixelated optical device, the method comprising:
providing a silicon substrate coated with an oxide;
depositing a first conductive layer onto the oxide coated silicon substrate;
forming a thin film on the first conductive layer;
etching the thin film and the first conductive layer to form a two-dimensional pixelated structure with spatial regions separated by wells;
filling wells in the pixelated structure with amorphous silicon to form a planarized surface;
depositing a second conductive layer on the planarized surface;
patterning holes adjacent the wells; and
performing a silicon etch to remove amorphous silicon from the wells.

In some embodiments, the thin film comprises a lead titanate-based material. In some embodiments, the thin film comprises a lithium niobate-based material. In some embodiments, the thin film comprises a barium titanate-based material. In some embodiments, the thin film comprises a potassium tantalate-based material.

In some embodiments, the first conductive layer comprises platinum. In other embodiments, the first conductive layer comprises aluminum.

In some embodiments, the step of forming the thin film on the first conductive layer comprises depositing the thin film material onto a seed layer using a physical vapor deposition method. In some embodiments, the seed layer is deposited onto the first conductive layer. In other embodiments, the seed layer defines the first conductive layer.

In some embodiments, the step of forming the thin film on the first conductive layer comprises growing the thin film on a seed layer using a chemical synthesis process. In some embodiments, the sol-gen process comprises the steps:
a) dip or spin-coating a chemical solution;
b) subjecting the sol-gel solution to high temperature to pyrolyze the chemical solution; and
c) crystallizing the pyrolized chemical solution to form a thin film material.

In some embodiments, the chemical synthesis process is a sol-gen process and the chemical solution is a sol-gel solution. In some embodiments, steps a) to c) are repeated to grow additional layers of the thin film material.

In some embodiments, the step of forming a thin film on the first conductive layer comprises:
i. implanting H⁺ ions into a bulk electro-optic material;
ii. directly bonding the bulk electro-optic material to the first conductive layer to form a bulk substrate;
iii. annealing the substrate to exfoliate a thin film material from the bulk substrate; and
iv. polishing the exfoliated thin film material.

### Brief Desxription of the Drawingss

Example embodiments of the disclosure will now be described, by way of example only, with reference to the accompanying drawings in which:
Figure 1A is a schematic illustration of an optical device according to a first embodiment of the disclosure showing different layer compositions;
Figure 1B is a schematic illustration of the optical device of Figure 1A showing layer geometry;
Figure 2A is a schematic illustration of an optical device according to a second embodiment of the disclosure showing different layer compositions;
Figure 2B is a schematic illustration of the optical device of Figure 2A showing layer geometry;
Figure 3 is a schematic illustration of an optical device according to a third embodiment of the disclosure;
Figure 4 is a schematic illustration of an optical device according to a fourth embodiment of the disclosure; and
Figure 5 is a series of schematic illustrations showing steps in a process for fabricating a device according to the disclosure;

### Detailed Description of the Disclosure

Embodiments of the present disclosure will be described with reference to pixelated optical devices such as optical phase modulators for switching devices. The devices are preferably adapted for modulating a reflected or transmitted optical signal or signals, which may comprise a plurality of individual wavelength channels. In particular, the embodiments described herein will focus on the use of a device as a switching engine for WSS devices. However, it will be appreciated that aspects of the present disclosure are applicable to other forms of pixelated optical devices such as holographic displays and projection systems, laser beam and pulse control applications, waveshaping and phase manipulation devices.

### Device overview

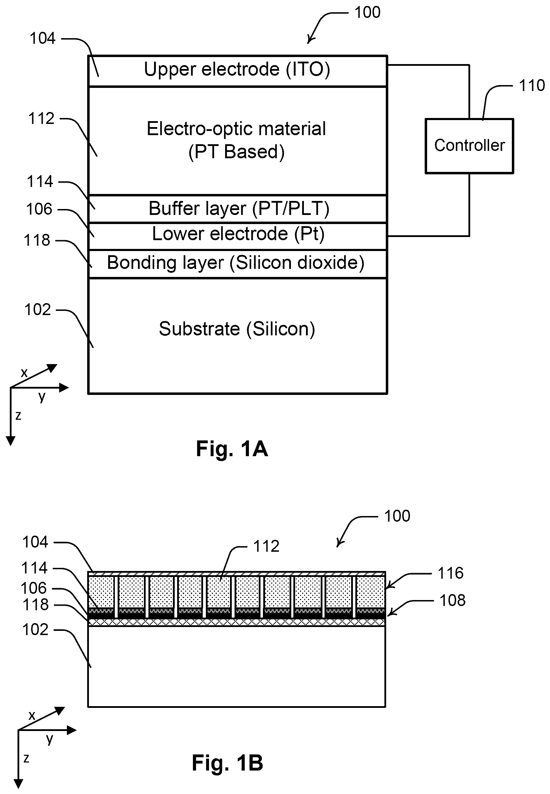

Referring to Figure 1, there is illustrated a pixelated optical device 100 in the form of a spatial light modulator device. Figure 1A schematically illustrates the different layers with example materials while Figure 1B schematically illustrates the relative sizes and structures within each layer. Spatial light modulator devices act to impart different effects (e.g. amplitude, phase or polarization modulation) to incident light as a function of spatial position. Device 100 comprises a substrate 102. Substrate 102 may be formed wholly or partially of silicon or may be formed wholly or partially of other materials such as glass or metallic materials. Substrate 102 forms a backplane of the device in a similar manner to a silicon backplane in a Liquid Crystal on Silicon (LCOS) device.

Device 100 comprises a pair of electrodes 104 and 106 for establishing an electric field across device 100 when in operation. An upper electrode 104 is formed of an optically transparent or partially optically transparent conductive material such as Indium Tin Oxide (ITO). Other possible materials that may be used to form upper electrode 104 include zinc oxide - ZnO (with or without dopants), graphene or carbon nanotubes. Upper electrode 104 must be at least partially optically transparent as it represents the window in which optical signals are received and transmitted. As shown in Figure 1B, a second lower electrode 106 is mounted to substrate 102 and includes a two dimensional array of pixels 108 extending in both a first and second lateral dimension (x and y dimension) across device 100. Although Figure 1B only illustrates one dimension of pixels 108, it will be appreciated that pixels 108 extend in the other lateral dimension to form a two dimensional array. The pixels may be substantially equal sided to form square pixels or may be rectangular in shape. In general, pixels 108 are of similar size to that of conventional LCOS devices, which is in the order of a few microns to 12 microns in area. However, in some embodiments, the pixel size is as low as 1 micron in area.

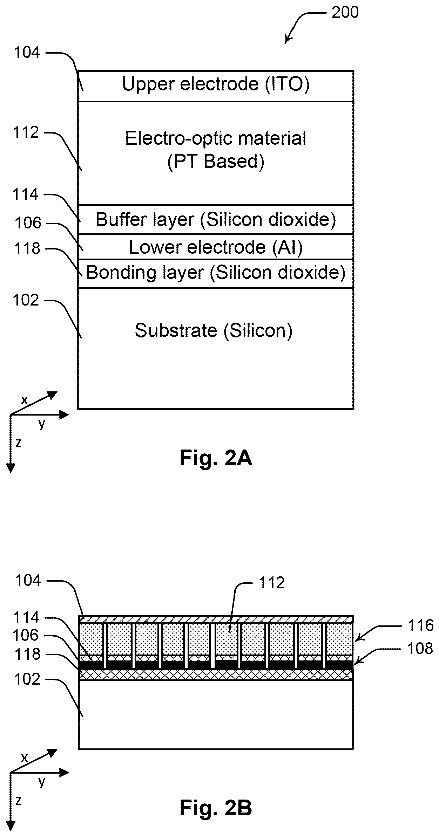

Lower electrode 106 is preferably reflective so as to reflect an incident optical signal. As illustrated in Figure 1, lower electrode 106 preferably comprises a platinum (Pt) material. However, in other embodiments, such as device 200 illustrated in Figure 2, lower electrode 106 comprises an aluminum (Al) material.

A solid-state thin film electro-optic material 112 is disposed between upper (i.e., first) and lower (i.e., second) electrodes 104 and 106 and configured to be drivable into a plurality of states in response to an electric field applied to pixels between the first and second electrodes. By "in response to" it is meant that the states of the material may be changed in some manner by the electric field. In some embodiments, this change is linearly or non-linearly proportional to the strength of the applied electric field.

The electric field applied across each pixel region of electro-optic material 112 is provided by respective drive signals from a controller 110 to pixels 108 of second electrode 106. In particular, electrodes 104 and 106 are electrically driven for supplying an electric potential across electro-optic material 112 to drive local regions of electro-optic material 112 in a predetermined configuration with different regions having different optical properties (e.g. refractive index). The drive signals may comprise a DC electric signal or a low frequency electric signal.

Each pixel 108 is independently drivable at one of a number of predetermined voltage levels to provide a local phase modulation to the incident signal. The phase modulation is provided by the electro-optic (EO) effect induced in the local region of electro-optic material 112, which causes a change in the refractive index of that pixel region. The change in refractive index of a pixel of electro-optic material 112 is linearly or non-linearly proportional to the strength of the applied electric field across that pixel. Particular spatial phase profiles can be established across device 100 to manipulate an optical wavefront or multiple wavefronts in particular ways such as to steer optical beams for switching. Electrical control of pixels 108 is typically provided by interconnections through substrate 102.

Device 100 is termed pixelated in that the two-dimensional array of pixels 108 are individually addressable by respective control signals provided by controller 110. Each pixel is individually drivable by a control signal to provide a local phase change to at least one polarization component of an optical signal that is input through upper electrode 104, thereby providing a two-dimensional array of phase, optical retardation or polarization manipulating regions. In some embodiments, electro-optic material 112 is polarization independent such that the same EO effect is applied to all polarization components of an incident optical signal. In other embodiments, electro-optic material 112 is polarization dependent such that different EO effects are applied to different polarization components of an incident optical signal.

In device 100 of Figure 1 and device 200 of Figure 2, electro-optic material 112 comprises a lead titanate-based material. These materials have the general chemical formula PbTiO₃. Lead titanate is a ferroelectric material having dielectric, piezoelectric and ferroelectric properties when subject to an electric field.

In other embodiments, electro-optic material 112 comprises other compounds such as a lithium niobate-based material, a barium titanate-based material, a potassium tantalate-based material or a lead magnesium niobate-lead titanate (PMN-PT) material. Preferably electro-optic material 112 is a textured thin film. A textured thin film is a type of thin film material with a deliberately rough or patterned surface. This texture can be at the microscopic or nanoscopic level and is created to enhance the film's properties or its interaction with light, electrical fields, or other external factors. Texturing can be achieved through various fabrication techniques such as etching, deposition processes, or by using templates during the film formation. Buffer layer 114 is needed to promote a growth of textured PT based thin films that will otherwise be untextured. It has been shown that textured films enhance the electro-optic coefficient.

As described below, electro-optic material 112 is formed from a semiconductor compatible manufacturing process such as a Sol-gel process, bonding to a bulk electro-optic material followed by a thinning process and/or a physical vapor deposition (PVD) process. The PVD process may comprise a sputter deposition process. During this process, a bonding layer 118 of silicon dioxide (SiO2) is added to substrate 102 to facilitate bonding of lower electrode 106 onto substrate 102.

This approach is amenable to wafer-scale fabrication and hence mass production addressing the manual assembly issue with the other spatial light modulator technology such as LCoS devices.

Referring still to Figure 1, a buffer layer 114 is preferably disposed between second electrode 106 and thin film electro-optic material 112. In some embodiments, buffer layer comprises lead titanate. In other embodiments, buffer layer 114 comprises a lead lanthanum titanate (PbLaTiO3) material. Buffer layer 114 provides a seed layer on which the chemically deposited or sputtered thin film will grow. This process is described in detail below.

As shown in Figure 1B, thin film electro-optic material 112 may be pixelated and comprise a two dimensional array of pixel regions 116 corresponding to lower electrode 106. The pixel regions 116 of pixelated electro-optic material 112 may be formed by etching and/or micromachining such that the regions have smooth substantially vertical sidewalls. The pixel regions 116 have a high aspect ratio and can act as active waveguides with electro-optic properties. The gap between pixels may be free space or may be filled with optically transparent dielectric material.

Referring to Figure 2, there is illustrated an alternative embodiment optical device 200. Device 200 operates in a similar manner to that of device 100 described above and corresponding features are designated with like reference numerals. Figure 2A schematically illustrates the different layers of device 200 with example materials while Figure 2B schematically illustrates the relative sizes and structures within each layer of device 200.

Optical device 200 comprises a silicon substrate 102, a pixelated PT-based solid-state electro-optic material 112 and electrodes 104 and 106. However, lower electrode 106 is formed of aluminum rather than platinum and buffer layer 114 comprises silicon dioxide. Use of aluminum as a reflective layer may be advantageous as it has a higher reflectivity than platinum. This design also permits the use of standard direct SiO2 to SiO2 bonding techniques.

Device 200 may be formed by a different fabrication process than that of device 100. In particular, in device 100, buffer layer 114 provides the seed layer on which the chemically deposited or sputtered PT based films will grow. In device 200 the PT-based thin films that form electro-optic material 112 may be exfoliated from bulk ceramic materials and transferred to silicon by H+ implant-bonding-splitting-polishing method.

The heterogenous structures in devices 100 and 200 are micromachined to form independently controlled pixelated active regions for enabling a programmable active surface. The approach is amenable to wafer scale fabrication and hence mass production addressing the manual assembly issue with the LCoS technology.

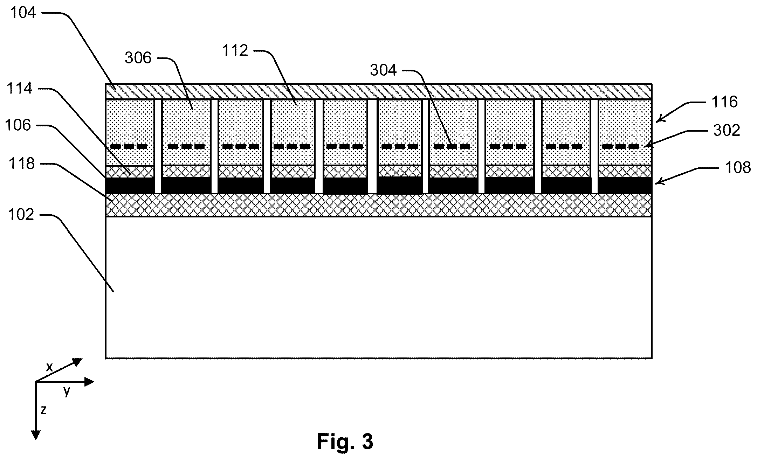

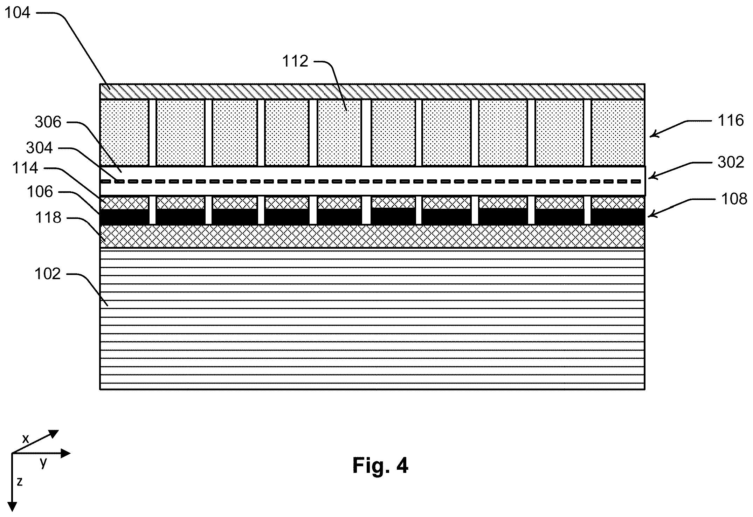

Referring now to Figures 3 and 4, alternative optical devices 300 and 400 are shown, which are fabricated to include a diffractive optical element (DOE) 302 disposed between electrodes 104 and 106 in a similar manner to that described in US Patent 10,302,995 to Frisken and Wu entitled *"High reflectivity LCOS device".* The contents of this document are herein incorporated by way of cross reference.

DOE 302 comprises an array of diffracting formations 304 formed of a first material having a first refractive index. The diffracting formations 304 extending in one or both of the first and second lateral dimensions (across device 100) and are at least partially surrounded by a second material 306 formed of a higher or lower refractive index than the first material. DOE 302 is adapted for at least partially reflecting the incident optical signal. As described below, DOE 302 can be formed at different locations within the optical device.

In device 300, DOE 302 is disposed within electro-optic material 112 and electro-optic material 112 forms the lower refractive index material. However, in some embodiments, DOE 302 may be formed within electro-optic material 112 and comprise a second lower refractive material that is separate to electro-optic material 112. In device 400 of Figure 4, DOE 302 is disposed between electro-optic material 112 and lower electrode 106 as a separate layer.

In either device 300 or device 400, the first material that forms the diffracting formations may comprise silicon. The second material 306 of lower refractive index may comprise silicon dioxide. However, as mentioned above, the second material 306 may comprise a higher refractive index than that of the first material. In some embodiments, DOE 302 is formed within buffer layer 114, wherein silicon dioxide acts as both the buffer and second material 306 of DOE 302. The diffracting formations 304 may have sizes (lateral width in the x-y plane) in the range of 100 to 1000 nm. In some embodiments, diffracting formations 304 have sizes (width and height) in the range of 100 to 500 nm, or 500 to 1000 nm. In some embodiments, the diffracting formations 304 are arranged in a layer having a thickness (in the z dimension) of 210 nm. However, the structure and size of DOE 302 scales with the size of device 300 and 400.

As illustrated in Figures 3 and 4, diffracting formations 304 may be spaced apart in the first or second lateral dimensions by a fixed periodicity. However, in other embodiments, diffracting formations 304 are spaced apart in the first or second lateral dimensions by a variable periodicity. Preferably, diffracting formations 304 are spaced apart in the first or second lateral dimensions by a periodicity that is less than the wavelength of the incident optical signal. The periodicity may be in the range 500 nm to 1000 nm. In particular embodiments, the periodicity is 850 nm. The duty cycle, i.e., the ratio of the size of the diffracting formations in a dimension to the period, of the first array is preferably 0.35.

In one embodiment, the optical device may comprise a second DOE (not illustrated) disposed between the electrodes and including a second array of diffracting formations. At least one of the first or second DOEs may be disposed within electro-optic material 112. In some embodiments, both of the first and second DOEs are disposed within electro-optic material 112. The first and second arrays of diffracting formations of the two DOEs may have different periodicities and may have different thicknesses in the first dimension.

In some embodiments, device 100 comprises one or more non-periodic thin layers or structures (not shown) to manipulate the properties of a wavefront of an incident optical signal. These thin layers or structures may be separate to or form part of DOE 302 and may be located within electro-optic material 112 or between electro-optic material 112 and lower electrode 106. Like DOE 302, these thin layers or structures are formed of a material having a lower or higher refractive index than the surrounding material in which they are embedded. By way of example, the thin layers or structures may be formed of silicon dioxide.

The thin layers or structures are non-periodic in the sense that they comprise refractive features formed from separate elements or changes in material that varies in refractive index across one or both of the lateral dimensions of device 100 (the x-y dimensions in the figures). Hence they provide a non-periodic refractive profile in those lateral dimensions. However, separate layers may be disposed in a periodic fashion along the z dimension and these layers may be disposed in a periodic fashion. For example, three equally spaced layers of equal thickness may be disposed within device 100 with each layer comprising a like or different refractive profile. In this regard, these thin layers or structures may be periodic in the z dimension.

The one or more layers preferably extend across an entire active area of device 100 in the x-y plane. This active area is defined by the area of electrodes 104 and 106 and also comprises an area in which light passes through device 100. These thin layers preferably have a thickness (in the z dimension) in the order of 50% to 150% of the wavelength of incident optical signals.

The non-periodic thin layers or structures may be adapted to define a phase manipulation surface or metasurface, which is able to control the phase of incident optical signals at a near-wavelength or subwavelength scale. The dimensions of the layers/structures may be in the order of the wavelength of light of incident optical signals or smaller.

Metasurfaces are structures that consist of subwavelength-sized structures, which can be tailored to manipulate the phase, amplitude, and polarization of incoming light or other electromagnetic waves in a desired manner to provide wavefront shaping and/or control of transmission and reflection.

These surfaces can be used to achieve a variety of advanced optical effects, such as focusing light, steering beams, or creating holograms. Metasurfaces have a wide range of applications, including in lenses, antennas, sensors, and other optical devices.

By way of example, the one or more non-periodic thin layers or structures may be configured to define a dielectric mirror (or Bragg mirror). This is a reflective device composed of multiple thin layers of dielectric material having different refractive indices. The reflectivity of a dielectric mirror is based on the interference of light reflected from the different layers of a dielectric stack. The characteristics of the layers can be tailored so as to provide different reflectivity at different wavelengths.

Another example use of one or more non-periodic thin layers or structures is to configure the layers/structures to define a half-wave plate or a quarter-wave plate to manipulate the polarization of incident optical signals. An example device is described in Munzza Ahmad, Juan Liu, and Ubaid Ur Rahman Qureshi, "Wideband reflective half- and quarter-wave plate metasurface based on multi-plasmon resonances," Opt. Continuum 2, 1242-1255 (2023). The solid state nature of the present disclosure allows such a device to be integrated into the structure of an optical phase modulator.

In operation, each PT based pixel 108 of electro-optic material 112 can be independently programmed with a bias voltage from controller 110 to tune its refractive index. PT based materials exhibit EO effects due to their non-centrosymmetric lattice structure. The presence of electric field *E* in poled PT material induces a variation *δn* in refractive index *n* of the material described by linear EO (pockel) coefficient *r* as $δn = - \frac{1}{2} {n}^{3} RE$ *.* In unpoled materials, *δn* is described by quadratic EO (kerr) coefficient *R* as $δn = - \frac{1}{2} {n}^{3} {RE}^{2}$ *.* By applying a spatially variable electric field profile at the pixels 108 in electro-optic material 112, resulting in a spatially controlled refractive index profile generated via the electro-optic effect.

Such a refractive index profile causes an incoming horizontal wavefront of an optical signal in free space to gain a spatially-controlled phase delay while propagating through and back (after being reflected at lower electrode 106) through electro-optic material 112, resulting in the beam steered by an angle, Θ. The steering angle can be tuned by controlling the ramping rate of the refractive index profile by controller 110. A steeper decrease in the refractive index profile results in a steeper increase in steering angle. The refractive index profile can be programmed by applying a periodic linearly varying electric field at the pixels in the desired sections to produce the desired steering angles corresponding to each output port of a WSS device. In addition, more complex spatial refractive index profiles can be applied to create a variety of effects. This includes directing the reflected wavefront into a multitude of propagation directions simultaneously, with control over the levels of optical power reflected to each direction. There is also the possibility of allowing the imposition of wavefront phase profiles that can perform other functions such as focus or aberration corrections, or control of dispersion, modulation of group delay, and pulse manipulation.

In addition to steering, phase profiles can be set up across pixels 108 of electro-optic material 112 to perform various phase manipulation functions on the wavefronts of one or more incident optical signals such as to perform waveshaping or filtering.

### Method of Fabrication

In device 100, the buffer layer 114 (PT/PLT)/Pt provides the seed layer on which the chemically deposited or sputtered PT based films will grow. Buffer layer 114 is needed to promote a growth of textured PT based films that will otherwise be textured. It has been shown that textured films enhance the EO coefficient. In device 200, the reflective layer and bottom electrode is aluminium (Al) and the PT based thin films are exfoliated from bulk ceramic materials and transferred to silicon by H+ implant-bonding-splitting-polishing method. The ceramic substrate will first be implanted with hydrogen (H+) ions to define the desired film thickness to be exfoliated. The implanted surface is then be coated with Al followed by Plasma- Enhanced Chemical Vapor Deposition (PECVD) SiO₂. It is then directly bonded (through SiO₂-SiO₂ bonding) to a silicon substrate coated with SiO₂.

During the direct bonding, the annealing temperature causes the implanted H+ to form bubbles that initiate the film splitting at the point of maximum H+ concentration from the bulk ceramics and repairs damage introduced by the ion implantation. By way of example, a 1 µm thick lead zirconate titanate (PZT) thin film exfoliated from PZT bulk ceramic, is reported to have a linear EO coefficient of 1600pm/V. The exfoliated and transferred film is then polished to smoothen its surface. Application of such methods to PT based ceramic materials is unique to the present disclosure. The heterogenous structures in devices 100 and 200 are then micromachined to form independently controlled pixelated active surface for enabling programmable active surface as illustrated in Fig. 1B and 2B, respectively. The approach is amenable to wafer scale fabrication and hence mass production, addressing the manual assembly issue with the LCoS technology. The PT based films are stable and less sensitive with temperature hence do not require thermal control systems. This leads to significant power reduction by a factor of more than 25. The use of solid state electro-optic materials also addresses the slow response time of liquid crystals, which is in the order of 10 ms. In contrast, PT based films have significantly faster EO response time in the order of nanoseconds. Furthermore, PT based films are polarization insensitive unlike liquid crystals, significantly simplifying the complexity of WSS modules.

In some embodiments, electro-optic material 112 can be deposited through a physical vapor deposition (PVD) system directly on to a seed layer. The seed layer defines the crystalline orientation of the EO film. The seed layer can be deposited onto the electrode or it can be the electrode itself. A typical PVD system is a sputter system.

In other embodiments, the thin film is grown by a chemical synthesis process such as a sol-gel process which also requires a seed layer. A typical sol-gel process includes (a) film formation through dip or spin-coating a chemical solution such as a sol-gel solution; (b) film pyrolysis usually on hotplates; (c) film crystallization at higher temperature; (d) optional, repeat step (a) to step (c) to grow a thicker film.

In further embodiments, a thin film electro-optic material is formed by starting with a bulk EO material. H+ ions are then implanted into the bulk material. The thickness of the EO thin film is determined by the H+ implantation ion energy. The bulk EO material is then directly bonded on to the electrode. The substrate is annealed and the annealing temperature causes the implanted H+ to form bubbles that initiate the film splitting (exfoliating) at the point of maximum H+ concentration from the bulk EO material. The exfoliated film is then polished through a standard semiconductor chemical mechanical polishing/planarization (CMP) process.

The following steps illustrate example steps of fabricating devices according to embodiments of the present disclosure.

### M1: Engineer large EO PT based films

M1.1 Seed layer: The PT based films in device 100 of Figure 1 require a reflective seed layer. In the case of PT/Pt or PLT/Pt seed layers, the Pt acts as the reflective layer and, as such, its surface roughness is critical. The Pt sputtering conditions (rate, pressure, RF power) and subsequent annealing temperature should be considered to reduce the surface roughness, which may be measured by AFM. The annealing temperature should be performed at the same crystallization temperature as that of sol-gel PT or PLT films to avoid peeling of the heterogeneous structure. The drying, crystallization temperatures and ambient conditions are the process parameters for the sol-gel PT or PLT films and they should be controlled to form smooth and highly texture films using AFM, XRD and TEM methods.

M1.2 Growth of PT based films: The next step in fabricating device 100 is to grow PT based films (PZT and PLZT) on the studied seed layers using chemical deposition methods. The properties of the PT based films are significantly impacted by their composition. Sol-gel solutions with various La/Zr/Ti (PZT, PLZT) and PMN/PT (PMN,PT) compositions may be used to grow the PT based films. The grown films may be analyzed using XPS, AFM, XRD and TEM to determine the exact composition, surface morphology and texture of the films.

M1.3 Exfoliating PT films on silicon from bulk ceramics: In device 200, the PT films are exfoliated and transferred onto silicon from bulk ceramics using H+ implant-bonding-splitting-polishing method. The method may have thickness limitations and bonding-polishing would be appropriate for thick PT films. Although the method is used in semiconductor industry, for example to fabricate SOI wafers, the application of the method to transfer PT films on silicon has not been performed before to the knowledge of the inventors. Ion implanter and direct bonder devices may be used for this process.

M1.4 Optical and EO properties of PT films: A top ITO electrode, formed on the PT films by sputtering, can be used to pole the film and apply programming voltage. The polarization of the PT based films can be measured using a Precision LC ferroelectric tester device or other similar device.

### M2: Micromachining of PT based films on silicon

To form a pixelated active surface, the PT films are micromachined to realize vertical, smooth sidewall, and high aspect ratio structures. The technique may involve conformal atomic layer etching (ALE) to reduce line edge roughness.

### M3: Development of PT based active surface WSS

M3.1 Design: The optical and EO properties of PT based films should be measured including electrical and ferroelectric properties such as polarization, piezoelectric coefficient, and dielectric constant. For example, the achievable aspect ratio, minimum pixelated structure, and sidewall verticality should be established. These, together with the material properties (optical, electro-optical, ferroelectric, electrical properties) are critical inputs necessary for building the device models for optical, electrical, and mechanical simulations to facilitate design. Simulations may be conducted using COMSOL multi-physics.

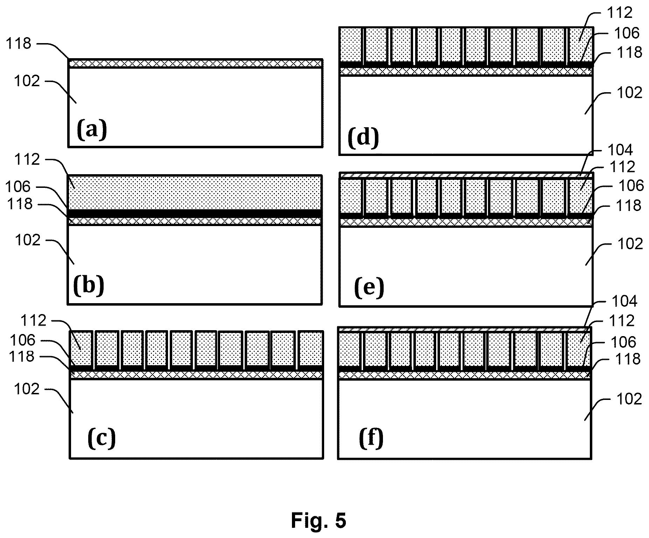

M3.2 Fabrication: The fabrication steps for device 100 are illustrated schematically in Figure 5. The process starts with a silicon wafer substrate 102 coated with an oxide bonding layer 118(Figure 5(a)) followed by Pt/Ti evaporation and PT film growth (Figure 5(b)) to form electro-optic material 112. Buffer layer 114 is not illustrated here but may be added to promote a growth of textured PT based thin films The PT film is then etched including Pt/Ti (Figure 5(c)) to form the pixel regions. The pixelated PZT structures are then filled with amorphous silicon (a-Si) and polished to planarize (Figure 5(d)). ITO is then deposited on the planarized surface (Figure 5(e)) and patterned to open holes in the gap areas followed by isotropic silicon etch to remove the a-Si (Figure 5(f)). The deposited ITO forms the upper electrode 104. The same fabrication steps also apply to device 200 and to the backplane silicon wafers.

M3.3 Measurement: To carry out the measurement tasks, the fabricated devices should first be packaged and assembled on a PCB board that will have the electronic circuits for programming the active surfaces defined by pixelated PT films. The devices are first characterised for beam steering performance in which the beam steering angle with various voltage profiles will be measured. The existing programming scheme for LCoS may be applied and used for testing the devices in the WSS set up where LCoS devices are regularly tested. The insertion loss, wavelength range, operational speed, temperature stability, and power consumption may be characterized.

### Advantages

The devices described above leverage a solid-state thin film electro-optic material, which eliminates the active thermal control system of a liquid crystal based spatial light modulator device. This could reduce the power consumption of such a device by a factor of more than 25. The PT based device does not require an alternating-polarity drive, which also reduces the power consumption of the driving circuitry. The use of a solid-state electro-optic material avoids the slow response time of liquid crystals, which are in the order of 10 ms. Further, PT based thin films are stable and less sensitive to polarization, thereby reducing design complexity and costs in WSS design and manufacturing as polarization diversity need not be considered. Finally, the devices described above are amenable to wafer scale fabrication and hence mass production addressing the manual assembly issue with the LCoS technology.

This proposal addresses these issues by replacing the LCoS with solid-state PT based films on silicon enabling wafer scale mass manufactured, low power and fast new optical switch engines that may be useful not only in the telecommunications industry and data centers but also in the area of spatial light modulators. In particular, the devices have applications in active diffractive optics for display applications such as projectors, automotive heads-up displays and wearable personal displays.

### Interpretation

The terms "optical" and "light" used throughout the specification are intended to refer to electromagnetic radiation in one or more of the visible, infrared or ultraviolet wavelength ranges.

Unless specifically stated otherwise, as apparent from the following discussions, it is appreciated that throughout the specification discussions utilizing terms such as "processing," "computing," "calculating," "determining", analyzing" or the like, refer to the action and/or processes of a computer or computing system, or similar electronic computing device, that manipulate and/or transform data represented as physical, such as electronic, quantities into other data similarly represented as physical quantities.

In a similar manner, the term "controller" or "processor" may refer to any device, portion of a device or plurality of devices that processes electronic data, e.g., from registers and/or memory to transform that electronic data into other electronic data that, e.g., may be stored in registers and/or memory. A "computer" or a "computing machine" or a "computing platform" may include one or more co-located or distributed processors.

Reference throughout this specification to "one embodiment", "some embodiments" or "an embodiment" means that a particular feature, structure or characteristic described in connection with the embodiment is included in at least one embodiment of the present disclosure. Thus, appearances of the phrases "in one embodiment", "in some embodiments" or "in an embodiment" in various places throughout this specification are not necessarily all referring to the same embodiment. Furthermore, the particular features, structures or characteristics may be combined in any suitable manner, as would be apparent to one of ordinary skill in the art from this disclosure, in one or more embodiments.

As used herein, unless otherwise specified the use of the ordinal adjectives "first", "second", "third", etc., to describe a common object, merely indicate that different instances of like objects are being referred to, and are not intended to imply that the objects so described must be in a given sequence, either temporally, spatially, in ranking, or in any other manner.

In the claims below and the description herein, any of the terms "comprising", "comprised of", "which comprises" or similar are open terms that mean including at least the elements/features that follow, but not excluding others. Thus, the term "comprising" and its variations, when used in the claims or description, should not be interpreted as being limitative to the means or elements or steps listed thereafter. For example, the scope of the expression a device comprising A and B should not be limited to devices consisting only of elements A and B. Similarly, any of the terms "including", "which includes", "that includes" or similar as used herein are also open terms that also mean including at least the elements/features that follow the term, but not excluding others. Thus, "including" is synonymous with and means "comprising".

It should be appreciated that in the above description of exemplary embodiments of the disclosure, various features of the disclosure are sometimes grouped together in a single embodiment, Fig., or description thereof for the purpose of streamlining the disclosure and aiding in the understanding of one or more of the various inventive aspects. This method of disclosure, however, is not to be interpreted as reflecting an intention that the claims require more features than are expressly recited in each claim. Rather, as the following claims reflect, inventive aspects lie in less than all features of a single foregoing disclosed embodiment. Thus, the claims following the Detailed Description are hereby expressly incorporated into this Detailed Description, with each claim standing on its own as a separate embodiment of this disclosure.

Furthermore, while some embodiments described herein include some but not other features included in other embodiments, combinations of features of different embodiments are meant to be within the scope of the disclosure, and form different embodiments, as would be understood by those skilled in the art. For example, in the following claims, any of the claimed embodiments can be used in any combination.

In the description provided herein, numerous specific details are set forth. However, it is understood that embodiments of the disclosure may be practiced without these specific details. In other instances, well-known methods, structures and techniques have not been shown in detail in order not to obscure an understanding of this description.

Similarly, it is to be noticed that the term coupled, when used in the claims, should not be interpreted as being limited to direct connections only. The terms "coupled" and "connected", along with their derivatives, may be used. It should be understood that these terms are not intended as synonyms for each other. Thus, the scope of the expression a device A coupled to a device B should not be limited to devices or systems wherein an output of device A is directly connected to an input of device B. It means that there exists a path between an output of A and an input of B which may be a path including other devices or means. "Coupled" may mean that two or more elements are either in direct physical, electrical or optical contact, or that two or more elements are not in direct contact with each other but yet still co-operate or interact with each other.

Embodiments described herein are intended to cover any adaptations or variations of the present disclosure. Although the present disclosure has been described and explained in terms of particular exemplary embodiments, one skilled in the art will realize that additional embodiments can be readily envisioned that are within the scope of the present disclosure.

## Claims

1. A pixelated optical device comprising:
a substrate;
a pair of electrodes including a first and a second electrode, the second electrode mounted to the substrate and including a two-dimensional array of pixels extending in both a first and second dimension; and
a solid-state thin film electro-optic material disposed between the first and second electrodes and configured to be drivable into a plurality of states in response to an electric field applied to pixels between the first and second electrodes, wherein the electric field applied across each pixel is provided by a drive signal provided to the pixel of the second electrode.

2. The optical device of claim 1 wherein the thin film electro-optic material comprises a lead titanate-based material.

3. The optical device of claim 1 wherein the thin film electro-optic material comprises a lithium niobate-based material.

4. The optical device of claim 1 wherein the thin film electro-optic material comprises a barium titanate-based material.

5. The optical device of claim 1 wherein the thin film electro-optic material comprises a potassium tantalate-based material.

6. The optical device of claim 1 wherein the thin film electro-optic material is formed from a semiconductor compatible manufacturing process.

7. The optical device of claim 6 wherein the semiconductor compatible manufacturing process comprises a physical vapor deposition (PVD) process.

8. The optical device of claim 7 wherein the PVD process comprises a sputter deposition process.

9. The optical device of claim 6 wherein the semiconductor compatible manufacturing process comprises bonding to a bulk electro-optic material followed by a thinning process.

10. The optical device of claim 1 wherein the first electrode comprises an indium tin oxide (ITO) material.

11. The optical device of claim 1 wherein the second electrode comprises a platinum (Pt) material.

12. The optical device of claim 1 wherein the second electrode comprises an aluminum (Al) material.

13. The optical device of claim 1 comprising a buffer layer disposed between the second electrode and the thin film electro-optic material.

14. The optical device of claim 13 wherein the buffer layer comprises lead titanate.

15. The optical device of claim 14 wherein the buffer layer comprises a lead lanthanum titanate (PbLaTiO₃) material.

16. The optical device of claim 1 wherein the electro-optic material comprises a PMN-PT material.

17. The optical device of claim 1 wherein the electro-optic material is a textured thin film.

18. The optical device of claim 1 wherein the substrate is a metallic substrate.

19. The optical device of claim 1 wherein the substrate is a silicon substrate.

20. The optical device of claim 1 wherein the electro-optic material comprises a two-dimensional array of pixels corresponding to the second electrode.

21. The optical device of claim 1 comprising a diffractive optical element disposed between the electrodes for at least partially reflecting an incident optical signal, wherein the diffractive optical element comprises an array of diffracting formations formed of a first material having a first refractive index, the diffracting formations extending in one or both of the first and second dimensions and being at least partially surrounded by a second material formed of a lower or higher refractive index than the first material.

22. The optical device of claim 21 wherein the diffractive optical element is disposed between the electro-optic material and the second electrode.

23. The optical device of claim 22 wherein the diffractive optical element is disposed within the electro-optic material.

24. The optical device of claim 21 wherein the first material is silicon.

25. The optical device of claim 21 wherein the second material is silicon dioxide.

26. The optical device of claim 21 wherein the diffracting formations are spaced apart in the first dimension by a fixed periodicity.

27. The optical device of claim 21 wherein the diffracting formations are spaced apart in the first dimension by a variable periodicity.

28. The optical device of claim 21 wherein the diffracting formations are spaced apart in the first dimensions by a periodicity that is less than a wavelength of the incident optical signal.

29. The optical device of claim 1 comprising one or more layers of material having non-periodic refractive features and configured to manipulate properties of a wavefront of an incident optical signal.

30. The optical device of claim 29 wherein the one or more layers form a metasurface.

31. The optical device of claim 29 wherein the one or more layers form a dielectric mirror.

32. The optical device of claim 29 wherein the one or more layers form a half-wave plate or quarter-wave plate.

33. The optical device of claim 1 wherein the drive signal is a DC electric signal.

34. The optical device of claim 1 wherein the drive signal is a low frequency electric signal.

35. The optical device of claim 1 wherein a refractive index of the electro-optic material changes in proportion to the applied electric field.

36. The optical device of claim 1 wherein the electro-optic material is polarization independent.
